# EUROPÄISCHE PATENTSCHRIFT

(11) **EP 3 368 345 B1**
(45) Veröffentlichungstag und Bekanntmachung des Hinweises auf die Patenterteilung: **27.11.2019**
(21) Anmeldenummer: 16738135.9
(22) Anmeldetag: 11.07.2016
(51) Int. Cl.: B60C 11/03, B60C 11/16

(54) **FAHRZEUGLUFTREIFEN**
TIRE
PNEUMATIQUE

(30) Priorität: 29.10.2015 DE 102015221118
(43) Veröffentlichungstag der Anmeldung: 05.09.2018
(73) Patentinhaber: Continental Reifen Deutschland GmbH, 30165 Hannover (DE)
(72) Erfinder: WIESE, Klaus, 30559 Hannover (DE); HEINHAUPT, Torsten, 29223 Celle (DE); VELLINGA-WALLENHAUER, Marieken, 30982 Pattensen (DE); SCHLITTENHARD, Jan, 30900 Wedemark (DE)
(74) Vertreter: Finger, Karsten
(86) Internationale Anmeldenummer: PCT/EP2016/066403
(87) Internationale Veröffentlichungsnummer: WO 2017/071842

(56) Entgegenhaltungen:
- EP-A1- 3 031 628
- WO-A1-2009/147046

## Beschreibung

Die Erfindung betrifft einen Fahrzeugluftreifen mit einem laufrichtungsgebunden ausgeführten Laufstreifen mit durch Rillen, wie beispielsweise Umfangsrillen, Querrillen, Schrägrillen und dergleichen, voneinander getrennten Profilpositiven, beispielsweise Profilblockreihen oder Profilbändern, wobei Profilpositive mit in Spikelöchern positionierten Spikes vorgesehen sind und um jeden Spike, im Profilpositiv vom Spike ausgehend, zumindest in die beiden Umfangsrichtungen - in und entgegen der Abrollrichtung bei Vorwärtsfahrt - erstreckend, seichte und langgestreckte Vertiefungen mit unterschiedlichen Volumina und unterschiedlichen Erstreckungslängen als Reservoire zur Aufnahme der beim Kratzen des Spikes auf Eis entstehenden Eissplitter ausgebildet sind, wobei die Vertiefung(en), welche sich bei Vorwärtsfahrt vom Spike aus in Abrollrichtung erstreckt bzw. erstrecken, bei mehreren Vertiefungen in Summe, das größte Volumen aufweist bzw. aufweisen.

Es ist bekannt und üblich, Laufstreifen von Fahrzeugluftreifen mit Spikes zu versehen, um unter winterlichen Fahrbedingungen die Kraftübertragung des Reifens auf schnee- und/oder eisbedeckten Fahrbahnen zu erhöhen. Die allgemeine Wirkungsweise von bespikten Reifen beruht dabei auf mehreren Effekten. Zum einen dringen Spikes in auf der Fahrbahn befindliches Eis ein und verzahnen sich in diesem mechanisch. Bei Brems- und Traktionsvorgängen treten darüber hinaus Relativbewegungen (Schlupf) zwischen dem Fahrzeugluftreifen und der eisbedeckten Fahrbahn auf, bei welchen die Spikes durch das Eis gezogen werden und dabei Rinnen in die Eisoberfläche fräsen. Die dabei anfallenden Eisspäne ("Eismehl") sammeln sich häufig um den jeweiligen Spike an, wodurch sowohl die Eisgriffwirkung des Spikes als auch die Eisgriffwirkung des den Spike umgebenden Gummimaterials des Laufstreifens leidet.

Um den negativen Auswirkungen der anfallenden Eisspäne entgegenzuwirken, ist es bekannt, zur Aufnahme der Eisspäne in unmittelbarer Nähe zum Spike seichte Vertiefungen als Ableitkanäle bzw. Reservoire vorzusehen. Derartige Ableitkanäle oder Vertiefungen sind in unterschiedlichen Ausgestaltungen bekannt.

Ein Reifen der eingangs genannten Art ist beispielsweise aus der WO 2009/147046 A1 bekannt. Der Laufstreifen dieses Fahrzeugluftreifens weist Profilblöcke mit Spikelöchern auf, um welche jeweils kanalförmige Vertiefungen vorgesehen sind, wobei jede kanalförmige Vertiefung in eine den jeweiligen Profilblock begrenzende Rille mündet. Die Summe der mittleren Querschnittsflächen der vorgesehenen Vertiefungen ist größer oder gleich der Mindestquerschnittsfläche des über die Laufstreifenoberfläche hinausragenden Teils des Spikepins. Gemäß einer Variante sind zwei sich bei Vorwärtsfahrt vom Spike aus in Abrollrichtung erstreckende Vertiefungen und eine sich bei Vorwärtsfahrt vom Spike aus entgegen der Abrollrichtung erstreckende Vertiefung vorgesehen. Die diese Variante zeigenden Figuren offenbaren, dass jede Vertiefung, welche sich vom Spike aus in Abrollrichtung erstreckt, ein größeres Volumen aufweist, als die Vertiefung, welche sich vom Spike aus entgegen der Abrollrichtung erstreckt.

Ein zur WO 2009/147046 A1 sehr ähnlicher Fahrzeugluftreifen ist aus der WO 2009/147047 A1 bekannt. Der Laufstreifen dieses Fahrzeugluftreifens weist mit Spikes versehene Profilblöcke auf, wobei im Bereich jedes Spikes zumindest eine lokale, kanalförmige Vertiefung ausgebildet ist. Die Vertiefungen enden jeweils innerhalb des Profilblockes, wobei jede Vertiefung vom Spikeloch höchstens einen Abstand von 1,0 cm aufweist. Die Summe der Volumina der um einen Spike vorgesehenen Vertiefungen in mm³ ist größer oder gleich dem Produkt der Mindestquerschnittsfläche des über die Laufstreifenoberfläche hinausragenden Teils des Spikepins in mm² und der Länge einer Vertiefung. Die Volumina betragen beispielsweise je 70 mm³. Die Vertiefungen können gerade oder auch kurvenförmig ausgeführt sein, wobei die Querschnittsfläche jeder Vertiefung über den Verlauf der Vertiefung variieren kann und die Querschnittsfläche beim Spike vorzugsweise jeweils am geringsten ist.

Ein weiterer Fahrzeugluftreifen mit einem bespikten Laufstreifen ist aus der WO 2014/123181 A1 bekannt. Um jedes im Laufstreifen vorgesehene Spikeloch sind jeweils zwei bogenförmig verlaufende Vertiefungen ausgebildet, welche jeweils durch zwei auf die Spikeachse bezogene Radien begrenzt sind. Ferner ist um jedes Spikeloch eine dritte Vertiefung mit einem bogenförmigen Abschnitt vorgesehen, an dessen Enden jeweils ein kurzer gerader Abschnitt anschließt, welcher jeweils in eine den Profilblock begrenzende Querrille mündet.

Aus der DE 10 2009 044 547 A1 ist ein weiterer Fahrzeugluftreifen mit einem bespikten Laufstreifen bekannt. Die Profilblöcke des Laufstreifens weisen eine den Spike ringförmig umschließende Vertiefung auf, von welcher weitere kanalförmige Vertiefungen zu den den Profilblock begrenzenden Querrillen verlaufen. Die kanalförmigen Vertiefungen weisen jeweils eine Breite von 1,0 mm bis 5,0 mm und jeweils eine Tiefe von 0,5 mm bis 1,5 mm auf. Zwischen den kanalförmigen Vertiefungen ist jeweils eine zum Profilblock gehörende Rippe ausgebildet. Ein weiterer Fahrzeugluftreifen, dessen Laufstreifen Spikes mit ringförmig umlaufenden Vertiefungen aufweist, ist aus der WO 2013/092434 A1 bekannt.

Darüber hinaus ist die EP 3 031 628 A1 ein älteres Recht gemäß Art. 54(3) EPÜ. Dieses Dokument betrifft ebenfalls im Laufstreifen bei Spikes als Vertiefungen ausgebildete Ableitkanäle.

Können die vorgesehenen Vertiefungen die Menge an anfallenden Eisspänen nicht vollständig aufnehmen, sammeln sich die Eisspäne zwischen dem Laufstreifen und der Fahrbahn, wodurch die Verzahnung der Spikes im Eis nicht optimal funktioniert und dementsprechend der Eisgriff leidet. Anderseits wirkt sich ein unnötig großes Volumen der vorgesehenen Vertiefungen nachteilig auf die Eisgriffeigenschaften der Profilpositive des Laufstreifens aus, da zu großflächige Vertiefungen die Gummioberfläche der Profilpositive merklich reduziert. Da die Spikes je nach Art der eingangs erwähnten Relativbewegung zwischen Fahrzeugluftreifen und Eisfahrbahn je nach Beanspruchung und Beanspruchungsrichtung unterschiedlich lange Rinnen in die Eisoberfläche fräsen, welche unterschiedlich große Mengen an Eisspänen zur Folge haben, sind die im Bereich von Spikes vorgesehenen Ableitkanäle bzw. Vertiefungen der bekannten Fahrzeugluftreifen verbesserungswürdig.

Der Erfindung liegt daher die Aufgabe zugrunde, bei einem Reifen der eingangs genannten Art mit einem laufrichtungsgebundenen Laufstreifen die um den die Spikes vorgesehenen, als Eisreservoire dienenden Vertiefungen an die unterschiedlichen Beanspruchungen bei Traktion, beim Bremsen und beim Auftreten von Seitenkräften, anzupassen.

Gelöst wird die gestellte Aufgabe erfindungsgemäß dadurch, dass sich vom Spike aus zumindest eine weitere Vertiefung nach außen, in Richtung der dem Spike näher befindlichen Reifenschulter erstreckt, welche, bei mehreren Vertiefungen in Summe, das kleinste Volumen aufweist.

Die mittleren Gleitwege bei Traktion sind am größten, sodass bei der Traktionskraftübertragung die in der Eisoberfläche entstehenden Rinnen am längsten sind. Es sind daher die Vertiefung(en) für die Aufnahme von Eisspänen, welche beim Abrollen des Fahrzeugluftreifens bei Vorwärtsfahrt als erste in die Bodenaufstandsfläche eintreten, erfindungsgemäß mit dem größten Volumen ausgeführt. Im Mittel kurze Gleitwege über die Eisoberfläche weisen die Spikes bei durch Querschlupf auftretenden Relativbewegungen, bei Seitenkraftübertragung, auf. Die sich vom Spike aus nach außen, in Richtung der dem Spike näher befindlichen Reifenschulter erstreckende Vertiefung weist vorzugsweise auch die kleinste Erstreckungslänge auf.

Vorzugsweise weist bzw. weisen die Vertiefung(en), welche sich bei Vorwärtsfahrt vom Spike aus in Abrollrichtung erstreckt bzw. erstrecken, auch die größte(n) Erstreckungslänge(n) auf.

Unter ABS-Bremskraftübertragung sind die Gleitwege der Spikes im Mittel geringer als unter Traktion. Es weist bzw. weisen daher die Vertiefung(en), welche sich bei Vorwärtsfahrt vom Spike aus entgegen der Abrollrichtung erstreckt bzw. erstrecken, bei mehreren Vertiefungen in Summe, ein Volumen auf, welches kleiner ist als das Volumen der Vertiefung(en), welche sich bei Vorwärtsfahrt vom Spike aus in Abrollrichtung erstreckt bzw. erstrecken, aber größer ist als das Volumen der Vertiefung(en), welche sichvom Spike aus nach außen, in Richtung der dem Spike näher befindlichen Reifenschulter erstreckt bzw. erstrecken. Diese Vertiefung(en) weist bzw. weisen insbesondere eine Erstreckungslänge auf, welche kleiner ist als die Erstreckungslänge der Vertiefung(en), welche sich bei Vorwärtsfahrt vom Spike aus entgegen der Abrollrichtung erstreckt bzw. erstrecken aber größer ist als die Erstreckungslänge der Vertiefung(en), welche sich nach außen, in Richtung der dem Spike näher befindlichen Reifenschulter erstreckt bzw. erstrecken.

Bei gleicher Ausführung der Vertiefungen in allen Richtungen würde zu viel Volumen zur Verfügung stehen und die Reibleistung an der Gummioberfläche zu stark reduziert sein. Bei erfindungsgemäß gestalteten Vertiefungen sind die Volumina optimal an die durch die unterschiedlichen Relativbewegungen zwischen Spike und Eisfahrbahn anfallenden Mengen an Eisspänen angepasst.

Bei einer besonders bevorzugten Ausführungsform der Erfindung weist bzw. weisen die Vertiefung(en), welche sich bei Vorwärtsfahrt vom Spike aus in Abrollrichtung erstreckt bzw. erstrecken, ein Volumen von 12,0 mm³ bis 13,3 mm³ auf. Jene Vertiefung(en), welche sich nach außen, in Richtung der dem Spike näher befindlichen Reifenschulter erstreckt bzw. erstrecken, weist bzw. weisen bevorzugt ein Volumen von 9,5 mm³ bis 10,7 mm³ auf. Vorzugsweise beträgt ferner das Volumen der Vertiefung(en), welche sich bei Vorwärtsfahrt vom Spike aus entgegen der Abrollrichtung erstreckt bzw. erstrecken, 10,7 mm³ bis 12,0 mm³.

Besonders vorteilhaft und bevorzugt sind ferner Ausführungsvarianten, bei welchen die Vertiefung(en), welche sich bei Vorwärtsfahrt vom Spike aus in Abrollrichtung erstreckt bzw. erstrecken, eine Erstreckungslänge von 4,9 mm bis 5,2 mm aufweist bzw. aufweisen, wobei ferner die Vertiefung(en), welche sich nach außen in Richtung der dem Spike näher befindlichen Reifenschulter erstreckt bzw. erstrecken, eine Erstreckungslänge von 3,7 mm bis 4,2 mm aufweist bzw. aufweisen. Die Erstreckungslänge der Vertiefung(en), welche sich bei Vorwärtsfahrt vom Spike aus entgegen der Abrollrichtung erstreckt bzw. erstrecken, beträgt 4,2 mm bis 4,7 mm.

Weitere, vorteilhafte Ausgestaltungen der Vertiefung(en) tragen zum Erreichen der oben erwähnten erfindungsgemäßen Effekte bei. In diesem Zusammenhang ist es günstig, wenn die Vertiefungen zumindest über den Großteil ihrer Erstreckung eine Tiefe von 0,5 mm bis 1,0 mm aufweisen. Eine weitere Maßnahme besteht darin, dass die sich in und entgegen der Abrollrichtung erstreckenden Vertiefungen paarweise und zur gleichen Symmetrieachse spiegelsymmetrisch angeordnet sind, wobei die Symmetrieachse unter einem Winkel von - 20° bis +20° zur Umfangsrichtung verläuft.

Bei einer weiteren bevorzugten Ausführungsform der Erfindung erstreckt sich vom Spike aus nach außen, in Richtung der dem Spike näher befindlichen Reifenschulter, ein Paar von Vertiefungen, wobei die Vertiefungen ebenfalls bezüglich einer Symmetrieachse spiegelsymmetrisch angeordnet sind. Die erwähnten Symmetrieachsen verlaufen senkrecht oder im Wesentlichen senkrecht zueinander.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Draufsicht auf einen Abschnitt einer Abwicklung eines Laufstreifens eines Fahrzeugluftreifens mit einer Ausführungsvariante der Erfindung,
Fig. 2 eine vergrößerte Draufsicht auf einen Teilbereich eines Profilblockes und
Fig. 3 einen Schnitt entlang der Linie III-III der Fig. 2.

Erfindungsgemäße Fahrzeugluftreifen sind Winterreifen für Personenkraftwagen, Vans oder Light-Trucks mit laufrichtungsgebundenen Laufstreifen.

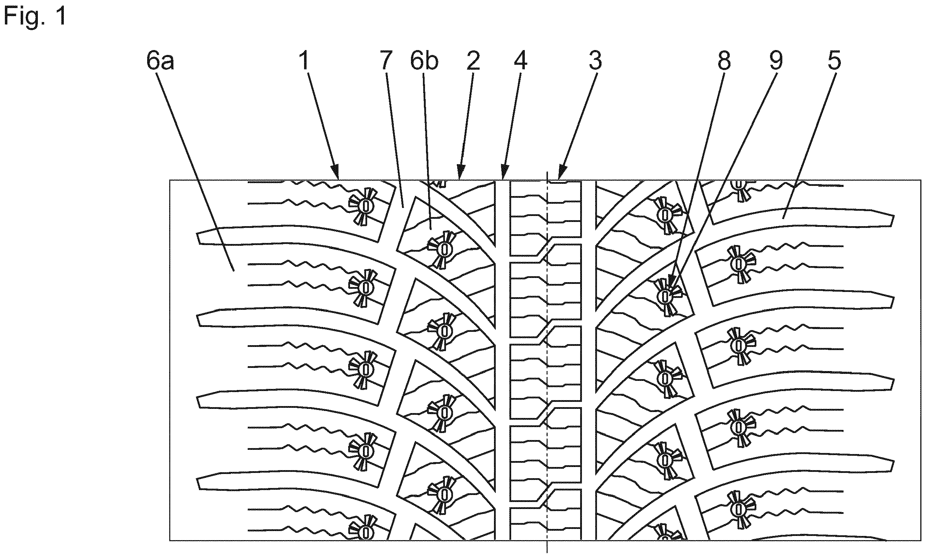

Der in Fig. 1 gezeigte Laufstreifen weist zwei schulterseitige Blockreihen 1, je eine an diese anschließende mittlere Blockreihe 2 und im zentralen Laufstreifenbereich ein in Umfangsrichtung umlaufendes Profilband 3 auf, welches von den mittleren Blockreihen 2 durch je eine im gezeigten Ausführungsbeispiel gerade verlaufende Umfangsrille 4 getrennt ist.

Von den Laufstreifenrändern bis zu den Umfangsrillen 4 insgesamt pfeilartig verlaufende Querrillen 5 verleihen dem Laufstreifen die erwähnte Laufrichtungsgebundenheit. Die beim gezeigten Ausführungsbeispiel in Draufsicht leicht gebogen verlaufenden Querrillen 5 erstrecken sich am Mündungsbereich zu den Umfangsrillen 4 vorzugsweise unter einem Winkel von 30° bis 60° zur Umfangsrichtung und verlaufen im Bereich ihres schulterseitigen Auslaufes im Wesentlichen in axialer Richtung. Die Profilblöcke 6a der schulterseitigen Blockreihen 1 sind von den Profilblöcken 6b der jeweils angrenzenden mittleren Blockreihe 2 durch Schrägrillen 7 getrennt, welche zwischen in Umfangsrichtung benachbarten Querrillen 5 verlaufen.

Ein Reifen mit diesem Laufstreifen wird derart am Fahrzeug montiert, dass beim Vorwärtsfahren die laufstreifeninnenseitigen Enden der Querrillen 5 zuerst in den Untergrund eintreten. Es ist grundsätzlich möglich, dass Fahrzeugluftreifen gemäß der Erfindung auf andere Weise laufrichtungsgebunden ausgeführte Laufstreifen aufweisen.

Das Profilband 3 und die Profilblöcke der Blockreihen 1 und 2 sind jeweils mit insbesondere in an sich bekannter Weise gestalteten Einschnitten versehen.

In den Profilblöcken 6a, 6b der Blockreihen 1 und 2 ist ferner jeweils ein Spikeloch 8 ausgebildet, in welches ein insbesondere in an sich bekannter Weise aus einem Spikekörper und einem Spikepin bestehender Spike 9 eingesetzt und verankert ist. Jedes Spikeloch 8 weist einen an den jeweiligen Spikekörper angepassten Durchmesser auf.

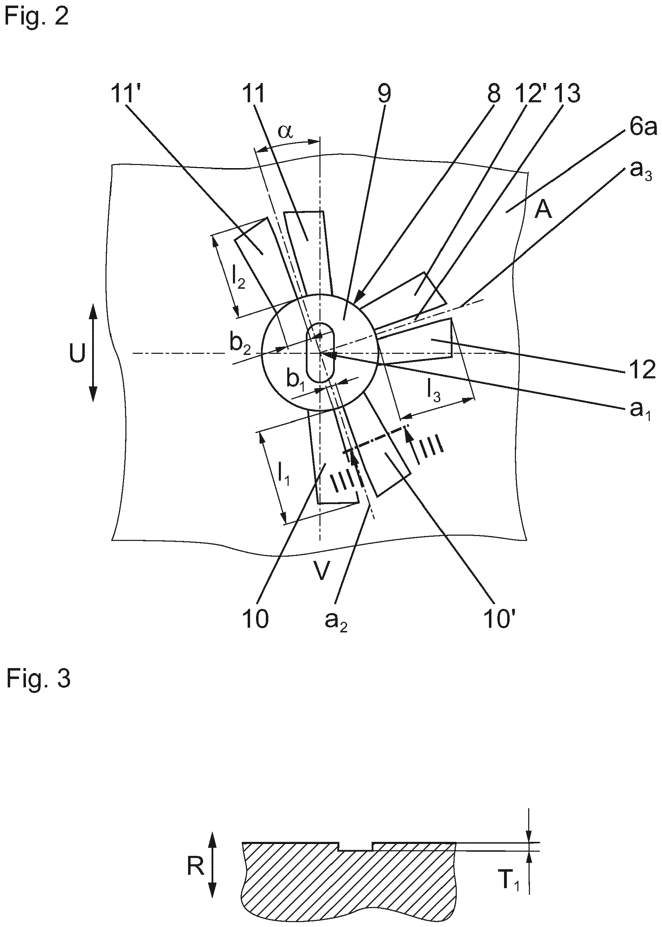

Fig. 2 zeigt eine Draufsicht auf einen Bereich eines Profilblockes 6a aus der in Fig. 1 rechten schulterseitigen Blockreihe 1. Die Umfangsrichtung des Laufstreifens ist mit dem Doppelpfeil "U", die der näher liegenden Reifenschulter zugewandte Seite des dargestellten Bereiches ist mit "A" gekennzeichnet. Die durch die Mitte des Spikes 9 verlaufende Spikeachse, welche mit a₁ bezeichnet ist, verläuft in radialer Richtung. Der bei montiertem Reifen, beim Vorwärtsfahren, zuerst mit dem Untergrund in Kontakt tretende Teil des Profilblockes 6a ist mit "V" bezeichnet.

Um jeden Spike 9 bzw. jedes Spikeloch 8 sind oberflächlich ausgebildete, langgestreckte und paarweise angeordnete Vertiefungen 10, 10', 11, 11', 12, 12' vorgesehen, die als Reservoire zur Aufnahme der beim Abrollen des Reifens auf eisigem Untergrund absplitternden Eisspäne dienen.

Die zu einem Paar gehörenden Vertiefungen 10, 10', die Vertiefungen 11, 11' und die Vertiefungen 12, 12' sind jeweils übereinstimmend ausgeführt. Die Vertiefungen 10, 10' erstrecken sich vom Spike 9 ausgehend in Umfangsrichtung und zwar in die Abrollrichtung bei Vorwärtsfahrt und weisen die größte Länge l₁ und, in Summe, das größte Volumen V₁ auf. Die Vertiefungen 11, 11' liegen den Vertiefungen 10, 10', durch das Spikeloch 8 getrennt, im Wesentlichen diametral gegenüber, erstrecken sich daher vom Spike 9 ausgehend entgegen die Abrollrichtung, weisen die zweitgrößte Länge l₂ und, in Summe, das zweitgrößte Volumen V₂ auf. Das dritte Paar von Vertiefungen 12, 12' erstreckt sich vom Spike 9 Richtung Reifenschulter A, wobei diese Vertiefungen 12, 12' die kleinste Länge l₃ und, in Summe, das kleinste Volumen V₃ von allen Paaren von Vertiefungen aufweisen. Die Länge l₁ der Vertiefungen 10, 10' beträgt 4,9 mm bis 5,2 mm, die Länge l₂ der Vertiefungen 11, 11' beträgt 4,2 mm bis 4,7 mm und die Länge l₃ der Vertiefungen 12, 12' beträgt 3,7 mm bis 4,2 mm, wobei l₁ > l₂ > l₃ gilt. Das Summen-Volumen V₁ der Vertiefungen 10, 10' beträgt 12 mm³ bis 13,3 mm³, das Summen-Volumina V₂ der Vertiefungen 11, 11' beträgt 10,7 mm³ bis 12 mm³ und das Summen-Volumen V₃ der Vertiefungen 12, 12' beträgt 9,5 mm³ bis 10,7 mm³, wobei V₁ > V₂ > V₃ gilt.

Die Volumina V₁, V₂, V₃ der Vertiefungen 10, 10', 11, 11', 12, 12' sind optimal an die durch die unterschiedlichen Relativbewegungen zwischen Spike 9 und Eisfahrbahn anfallenden Mengen an Eisspänen angepasst, die Vertiefungen 10, 10' an jene bei Traktionskraftübertragung, die Vertiefungen 11, 11' an jene beim ABS-Bremsen und die Vertiefungen 12, 12' an jene bei Seitenkraftübertragung.

Sämtliche Vertiefungen 10, 10', 11, 11', 12, 12' weisen ferner zumindest über den Großteil ihrer Erstreckung eine Tiefe T₁ (Fig. 3) auf, die 0,5 mm bis 1,0 mm beträgt. Die Tiefe T₁ kann sich über die Längserstreckung der Vertiefungen 10, 10', 11, 11', 12, 12', insbesondere kontinuierlich, vergrößern oder verkleinern.

Bei der gezeigten Ausführungsvariante grenzen sämtliche Vertiefungen 10, 10', 11, 11', 12, 12' an den bei der Vulkanisation verwendeten Moldpineinsatz an, wobei zwischen diesem und den Vertiefungen üblicherweise eine sehr dünne Gummihaut gebildet wird. Die zu einem Paar gehörenden Vertiefungen 10, 10', 11, 11' sowie 12, 12 sind bezüglich in Draufsicht durch den Spikemittelpunkt verlaufende Symmetrieachsen a₂ und a₃ spiegelsymmetrisch zueinander ausgeführt und angeordnet.

Entsprechend ihrer diametralen Anordnung sind die beiden paarweise angeordneten Vertiefungen 10,10' sowie 11, 11' zur gleichen Symmetrieachse a₂ spiegelsymmetrisch. Die Symmetrieachse a₂ verläuft vorzugsweise unter einem Winkel α von -20° bis 20°, zur Umfangsrichtung U, wobei bei der gezeigten Ausführung die Vertiefungen 10, 10' Richtung Reifenschulter A geneigt sind. Die paarweise angeordneten Vertiefungen 12, 12' verlaufen bezüglich der Symmetrieachse a₃ spiegelsymmetrisch zueinander, welche bei der gezeigten, bevorzugten Ausführungsvariante senkrecht zur Symmetrieachse a₂ verläuft, wobei a₃ unter einem Winkel von -20° bis 20° von dieser Senkrechten abweichen kann.

Die jeweils paarweise angeordneten Vertiefungen 10, 10', 11, 11', 12, 12' weisen an ihren dem Spike 9 benachbarten inneren Endbereichen jeweils einen gegenseitigen Abstand b₁ von 0,4 mm bis 0,6 mm, insbesondere von 0,5 mm, auf, wobei, der gegenseitige Abstand bei der gezeigten Ausführungsvariante zu den äußeren Endbereichen der Vertiefungen 10, 10', 11, 11', 12, 12' jeweils um bis zu 1,0 mm, insbesondere um bis zu 0,5 mm, kontinuierlich zunimmt. Die Vertiefungen 10, 10', 11, 11', 12, 12' selbst weisen an ihren beim Spike 9 befindlichen inneren Endbereichen jeweils eine Breite b₂ auf, welche 1,0 mm bis 1,5 mm, insbesondere 1, 25 mm, beträgt, wobei ihre größte Breite b₃ an ihren äußeren Endbereichen 1,5 mm bis 2,5 mm beträgt.

In jeder Laufstreifenhälfte sind die Vertiefungen 10, 10', 11, 11', 12, 12' derart angeordnet, dass, bezogen auf die Position des jeweiligen Spikes 9, sich die Vertiefung(en) 10, 10' mit dem größten Volumen V₁ in die Abrollrichtung bei Vorwärtsfahrt erstreckt bzw. erstrecken, die Vertiefung(en) 11, 11' mit dem zweitgrößten Volumen V₂ dieser bzw. diesen im Wesentlichen diametral gegenüber liegt bzw. liegen und die Vertiefung(en) 12,12' mit dem geringsten Volumen V₃ sich in Richtung des am nächsten befindlichen Laufstreifenrandes erstreckt bzw. erstrecken.

Bei einer weiteren nicht dargestellten Ausführungsvariante ist anstelle von Paaren jeweils nur eine Vertiefung vorgesehen, wobei diese analog zur obigen Ausführung Volumina V₁, V₂, V₃ aufweisen. Die äußere Form der Vertiefungen kann von der dargestellten abweichen.

### Bezugsziffernliste

- 1: Blockreihe
- 2: Blockreihe
- 3: Profilband
- 4: Umfangsrille
- 5: Querrille
- 6a, 6b: Profilblock
- 7: Schrägrille
- 8: Spikeloch
- 9: Spike
- 10, 10', 11, 11', 12,: 12'....Vertiefung
- a₁: Spikeachse
- a₂, a₃: Symmetrieachse
- b₁: Abstand
- b₂: Breite
- l₁, l₂, l₃: Länge
- T₁: Tiefe
- R: Radialrichtung
- U: Umfangsrichtung
- V₁, V₂, V₃: Volumen
- α: Winkel

## Patentansprüche

1. Fahrzeugluftreifen mit einem laufrichtungsgebunden ausgeführten Laufstreifen mit durch Rillen, wie beispielsweise Umfangsrillen (4), Querrillen (5), Schrägrillen (7) und dergleichen, voneinander getrennten Profilpositiven, beispielsweise Profilblockreihen (1, 2) oder Profilbändern (3), wobei Profilpositive mit in Spikelöchern (8) positionierten Spikes (9) vorgesehen sind und um jeden Spike (9), im Profilpositiv vom Spike (9) ausgehend, zumindest in die beiden Umfangsrichtungen (U) - in und entgegen der Abrollrichtung bei Vorwärtsfahrt - erstreckend, seichte und langgestreckte Vertiefungen (10, 10', 11, 11') mit unterschiedlichen Volumina und unterschiedlichen Erstreckungslängen als Reservoire zur Aufnahme der beim Kratzen des Spikes (9) auf Eis entstehenden Eissplitter ausgebildet sind,
wobei die Vertiefung(en) (10, 10'), welche sich bei Vorwärtsfahrt vom Spike (9) aus in Abrollrichtung erstreckt bzw. erstrecken, bei mehreren Vertiefungen (10, 10') in Summe, das größte Volumen (V₁) aufweist bzw. aufweisen,
**dadurch gekennzeichnet,**
**dass** sich vom Spike (9) aus zumindest eine weitere Vertiefung (12, 12') nach außen, in Richtung der dem Spike (9) näher befindlichen Reifenschulter erstreckt, welche, bei mehreren Vertiefungen (12, 12') in Summe, das kleinste Volumen (V₃) aufweist.

2. Fahrzeugluftreifen nach Anspruch 1, **dadurch gekennzeichnet, dass** die Vertiefung(en) (10, 10'), welche sich bei Vorwärtsfahrt vom Spike (9) aus in Abrollrichtung erstreckt bzw. erstrecken, die größte(n) Erstreckungslänge(n) (l₁) aufweist bzw. aufweisen.

3. Fahrzeugluftreifen nach Anspruch 1 oder 2, **dadurch gekennzeichnet, dass** die sich vom Spike (9) aus nach außen, in Richtung der dem Spike (9) näher befindlichen Reifenschulter erstreckende(n) Vertiefung(en) (12, 12') die kleinste Erstreckungslänge(n) (l₃) aufweist bzw. aufweisen.

4. Fahrzeugluftreifen nach einem der Ansprüche 1 bis 3, **dadurch gekennzeichnet, dass** die Vertiefung(en) (11, 11'), welche sich bei Vorwärtsfahrt vom Spike aus entgegen der Abrollrichtung erstreckt bzw. erstrecken, bei mehreren Vertiefungen (11, 11') in Summe, ein Volumen (V₂) aufweist bzw. aufweisen, welches kleiner ist als das Volumen (V₁) der Vertiefung(en) (10, 10'), welche sich bei Vorwärtsfahrt vom Spike (9) aus in Abrollrichtung erstreckt bzw. erstrecken, aber größer ist als das Volumen (V₃) der Vertiefung(en) (12, 12'), welche sich nach außen, in Richtung der dem Spike (9) näher befindlichen Reifenschulter erstreckt bzw. erstrecken.

5. Fahrzeugluftreifen nach einem der Ansprüche 1 bis 4, **dadurch gekennzeichnet, dass** die Vertiefung(en) (11, 11'), welche sich bei Vorwärtsfahrt vom Spike (9) aus entgegen der Abrollrichtung erstreckt bzw. erstrecken eine Erstreckungslänge (l₂) aufweist bzw. aufweisen, welche kleiner ist als die Erstreckungslänge (l₁) der Vertiefung(en) (11, 11'), welche sich bei Vorwärtsfahrt vom Spike (9) aus entgegen der Abrollrichtung erstreckt bzw. erstrecken aber größer ist als die Erstreckungslänge (l₃) der Vertiefung(en) (12, 12'), welche sich nach außen, in Richtung der dem Spike (9) näher befindlichen Reifenschulter erstreckt bzw. erstrecken.

6. Fahrzeugluftreifen nach einem der Ansprüche 1 bis 5, **dadurch gekennzeichnet, dass** die Vertiefung(en) (10, 10'), welche sich bei Vorwärtsfahrt vom Spike (9) aus in Abrollrichtung erstreckt bzw. erstrecken, ein Volumen (V₁) von 12 mm³ bis 13,3 mm³ aufweist bzw. aufweisen.

7. Fahrzeugluftreifen nach einem der Ansprüche 1 bis 6, **dadurch gekennzeichnet, dass** die Vertiefung(en) (12, 12'), welche sich nach außen, in Richtung der dem Spike (9) näher befindlichen Reifenschulter erstreckt bzw. erstrecken, ein Volumen (V₃) von 9,5 mm³ bis 10,7 mm³ aufweist bzw. aufweisen.

8. Fahrzeugluftreifen nach einem der Ansprüche 1 bis 7, **dadurch gekennzeichnet, dass** die Vertiefung(en) (11, 11'), welche sich bei Vorwärtsfahrt vom Spike aus entgegen der Abrollrichtung erstreckt bzw. erstrecken, ein Volumen (V₂) von 10,7 mm³ bis 12 mm³ aufweisen.

9. Fahrzeugluftreifen nach einem der Ansprüche 1 bis 8, **dadurch gekennzeichnet, dass** die Vertiefung(en) (10, 10'), welche sich bei Vorwärtsfahrt vom Spike (9) aus in die Abrollrichtung erstreckt bzw. erstrecken, eine Erstreckungslänge (l₁) von 4,9 mm bis 5,2 mm aufweist bzw. aufweisen.

10. Fahrzeugluftreifen nach einem der Ansprüche 1 bis 9, **dadurch gekennzeichnet, dass** Vertiefung(en) (12, 12'), welche sich nach außen, in Richtung der dem Spike (9) näher befindlichen Reifenschulter erstreckt bzw. erstrecken, eine Erstreckungslänge (l₃) von 3,7 mm bis 4,2 mm aufweist bzw. aufweisen.

11. Fahrzeugluftreifen nach einem der Ansprüche 1 bis 10, **dadurch gekennzeichnet, dass**, dass Vertiefung(en) (11, 11'), welche sich bei Vorwärtsfahrt vom Spike aus entgegen der Abrollrichtung erstreckt bzw. erstrecken eine Erstreckungslänge (l₂) von 4,2 mm bis 4,7 mm aufweist bzw. aufweisen.

12. Fahrzeugluftreifen nach einem der Ansprüche 1 bis 11, **dadurch gekennzeichnet, dass** die Vertiefungen (10, 10', 11, 11', 12, 12') zumindest über den Großteil ihrer Erstreckung eine Tiefe (T₁) von 0,5 mm bis 1,0 mm aufweisen.

13. Fahrzeugluftreifen nach einem der Ansprüche 1 bis 12, **dadurch gekennzeichnet, dass** die sich in und entgegen der Abrollrichtung erstreckenden Vertiefungen (10,10', 11, 11') paarweise und zur gleichen Symmetrieachse (a₂) spiegelsymmetrisch angeordnet sind.

14. Fahrzeugluftreifen nach Anspruch 13, **dadurch gekennzeichnet, dass** die Symmetrieachse (a₂) unter einem Winkel (α) von -20° bis 20° zur Umfangsrichtung verläuft.

15. Fahrzeugluftreifen nach einem der Ansprüche 1 bis 14, **dadurch gekennzeichnet, dass** sich vom Spike (9) aus nach außen, in Richtung der dem Spike (9) näher befindlichen Reifenschulter, ein Paar von Vertiefungen (12, 12') erstreckt, wobei die Vertiefungen (12, 12') bezüglich einer Symmetrieachse (a₃) spiegelsymmetrisch angeordnet sind.

16. Fahrzeugluftreifen nach einem der Ansprüche 13 bis 15, **dadurch gekennzeichnet, dass** die Symmetrieachsen(a₂, a₃) senkrecht oder im Wesentlichen senkrecht zueinander verlaufen.

## Claims

1. Pneumatic vehicle tire having a tread of directional design and with profile positives, for example profile block rows (1, 2) or profile strips (3), which are separated from one another by channels, for example circumferential channels (4), transverse channels (5), oblique channels (7) and the like, wherein profile positives are provided with spikes (9) positioned in spike holes (8), and, around each spike (9), shallow and elongate depressions (10, 10', 11, 11') with different volumes and different extent lengths, as reservoirs for receiving the ice chips that form when the spike (9) scrapes on ice, are formed in the profile positive so as to extend at least in both circumferential directions (U) - in and counter to the rolling direction during forward travel - proceeding from the spike (9),
wherein the depression(s) (10, 10') that extend(s) from the spike (9) in the rolling direction during forward travel has or have, in sum total in the case of multiple depressions (10, 10'), the greatest volume (V₁),
**characterized**
**in that** at least one further depression (12, 12') extends from the spike (9) outward in the direction of the tire shoulder situated closest to the spike (9), which at least one further depression, in sum total in the case of multiple depressions (12, 12'), has the smallest volume (V₃).

2. Pneumatic vehicle tire according to Claim 1, **characterized in that** the depression(s) (10, 10') that extend(s) from the spike (9) in the rolling direction during forward travel has or have the greatest extent length (s) (l₁).

3. Pneumatic vehicle tire according to Claim 1 or 2, **characterized in that** the depression (s) (12, 12') that extend(s) from the spike (9) outward in the direction of the tire shoulder situated closest to the spike (9) has or have the smallest extent length(s) (l₃).

4. Pneumatic vehicle tire according to one of Claims 1 to 3, **characterized in that** the depression(s) (11, 11') that extend(s) from the spike counter to the rolling direction during forward travel has or have, in sum total in the case of multiple depressions (11, 11'), a volume (V₂) which is smaller than the volume (V₁) of the depression(s) (10, 10') that extend(s) from the spike (9) in the rolling direction during forward travel but which is greater than the volume (V₃) of the depression (s) (12, 12') that extend(s) outward in the direction of the tire shoulder situated closest to the spike (9).

5. Pneumatic vehicle tire according to one of Claims 1 to 4, **characterized in that** the depression(s) (11, 11') that extend(s) from the spike (9) counter to the rolling direction during forward travel has or have an extent length (l₂) which is smaller than the extent length (l₁) of the depression(s) (11, 11') that extend(s) from the spike (9) counter to the rolling direction during forward travel but which is greater than the extent length (l₃) of the depression(s) (12, 12') that extend(s) outward in the direction of the tire shoulder situated closest to the spike (9).

6. Pneumatic vehicle tire according to one of Claims 1 to 5, **characterized in that** the depression(s) (10, 10') that extend(s) from the spike (9) in the rolling direction during forward travel has or have a volume (V₁) of 12 mm³ to 13.3 mm³.

7. Pneumatic vehicle tire according to one of Claims 1 to 6, **characterized in that** the depression(s) (12, 12') that extend (s) outward in the direction of the tire shoulder situated closest to the spike (9) has or have a volume (V₃) of 9.5 mm³ to 10.7 mm³.

8. Pneumatic vehicle tire according to one of Claims 1 to 7, **characterized in that** the depression(s) (11, 11') that extend(s) from the spike counter to the rolling direction during forward travel has or have a volume (V₂) of 10.7 mm³ to 12 mm³.

9. Pneumatic vehicle tire according to one of Claims 1 to 8, **characterized in that** the depression(s) (10, 10') that extend(s) from the spike (9) in the rolling direction during forward travel has or have an extent length (l₁) of 4.9 mm to 5.2 mm.

10. Pneumatic vehicle tire according to one of Claims 1 to 9, **characterized in that** depression(s) (12, 12') that extend(s) outward in the direction of the tire shoulder situated closest to the spike (9) has or have an extent length (l₃) of 3.7 mm to 4.2 mm.

11. Pneumatic vehicle tire according to one of Claims 1 to 10, **characterized in that** depression (s) (11, 11') that extend(s) from the spike counter to the rolling direction during forward travel has or have an extent length (l₂) of 4.2 mm to 4.7 mm.

12. Pneumatic vehicle tire according to one of Claims 1 to 11, **characterized in that** the depressions (10, 10', 11, 11', 12, 12') have, at least over a major part of their extent, a depth (T₁) of 0.5 mm to 1.0 mm.

13. Pneumatic vehicle tire according to one of Claims 1 to 12, **characterized in that** the depressions (10, 10', 11, 11') that extend in and counter to the rolling direction are arranged in pairwise fashion and mirror-symmetrically about the same axis of symmetry (a₂).

14. Pneumatic vehicle tire according to Claim 13, **characterized in that** the axis of symmetry (a₂) runs at an angle (α) of -20° to 20° with respect to the circumferential direction.

15. Pneumatic vehicle tire according to one of Claims 1 to 14, **characterized in that** a pair of depressions (12, 12') extends from the spike (9) outward in the direction of the tire shoulder situated closest to the spike (9), wherein the depressions (12, 12') are arranged mirror-symmetrically about an axis of symmetry (a₃).

16. Pneumatic vehicle tire according to one of Claims 13 to 15, **characterized in that** the axes of symmetry (a₂, a₃) run perpendicular or substantially perpendicular to one another.

## Revendications

1. Pneumatique de véhicule comportant une bande de roulement réalisée de manière directionnelle et dotée de profilés positifs, par exemple de rangées de blocs profilés (1, 2) ou de bandes profilées (3), séparés les uns des autres par des rainures, par exemple des rainures périphériques (4), des rainures transversales (5), des rainures obliques (7) et similaires, des profilés positifs dotés de crampons (9) positionnés dans des trous de crampon (8) étant prévus et des évidements (10, 10', 11, 11') allongés et peu profonds, présentant des volumes différents et différentes longueurs d'étendue étant réalisés, en tant que réservoirs destinés à recevoir les copeaux de glace produits lorsque le crampon (9) gratte la glace, à partir du crampon (9) dans le profilé positif autour de chaque crampon (9), de manière à s'étendre au moins dans les deux sens périphériques (U) (dans le sens de roulement en marche avant et en sens inverse à celui-ci),
le(s) évidement(s) (10, 10') qui s'étend(ent) à partir du crampon (9) dans le sens de roulement en marche avant ayant, au total dans le cas de plusieurs évidements (10, 10'), le plus grand volume (V₁),
**caractérisé en ce**
**qu'**au moins un autre évidement (12, 12') s'étend à partir du crampon (9) vers l'extérieur en direction de l'épaulement de pneumatique situé plus près du crampon (9), lequel évidement présente, au total dans le cas de plusieurs évidements (12, 12'), le plus petit volume (V₃) .

2. Pneumatique de véhicule selon la revendication 1, **caractérisé en ce que** le (s) évidement(s) (10, 10') qui s'étend(ent) à partir du crampon (9) dans le sens de roulement en marche avant présente(nt) la ou les plus grande(s) longueur(s) d'étendue (l₁).

3. Pneumatique de véhicule selon la revendication 1 ou 2, **caractérisé en ce que** le(s) évidement(s) (12, 12') s'étendant à partir du crampon (9) vers l'extérieur en direction de l'épaulement de pneumatique situé plus près du crampon (9) présente (nt) la ou les plus petite (s) longueur(s) d'étendue (l₃).

4. Pneumatique de véhicule selon l'une des revendications 1 à 3, **caractérisé en ce que** le(s) évidement(s) (11, 11') qui s'étend(ent) à partir du crampon en sens inverse au sens de roulement en marche avant présente (nt), au total dans le cas de plusieurs évidements (11, 11'), un volume (V₂) qui est inférieur au volume (V₁) du ou des évidement(s) (10, 10') qui s'étend(ent) à partir du crampon (9) dans le sens de roulement en marche avant, mais supérieur au volume (V₃) du ou des évidement(s) (12, 12') qui s'étend(ent) vers l'extérieur en direction de l'épaulement de pneumatique situé plus près du crampon (9).

5. Pneumatique de véhicule selon l'une des revendications 1 à 4, **caractérisé en ce que** le(s) évidement(s) (11, 11') qui s'étend(ent) à partir du crampon (9) en sens inverse au sens de roulement en marche avant présente(nt) une longueur d'étendue (l₂) qui est inférieure à la longueur d'étendue (l₁) du ou des évidement(s) (11, 11) qui s'étend(ent) à partir du crampon (9) en sens inverse au sens de roulement en marche avant, mais supérieure à la longueur d'étendue (l₃) du ou des évidement(s) (12, 12') qui s'étend(ent) vers l'extérieur en direction de l'épaulement de pneumatique situé plus près du crampon (9).

6. Pneumatique de véhicule selon l'une des revendications 1 à 5, **caractérisé en ce que** le(s) évidement(s) (10, 10') qui s'étend(ent) à partir du crampon (9) dans le sens de roulement en marche avant présente(nt) un volume (V₁) de 12 mm³ à 13,3 mm³.

7. Pneumatique de véhicule selon l'une des revendications 1 à 6, **caractérisé en ce que** le(s) évidement(s) (12, 12') qui s'étend(ent) vers l'extérieur en direction de l'épaulement de pneumatique situé plus près du crampon (9) présente (nt) un volume (V₃) de 9,5 mm³ à 10,7 mm³.

8. Pneumatique de véhicule selon l'une des revendications 1 à 7, **caractérisé en ce que** le(s) évidement(s) (11, 11') qui s'étend(ent) à partir du crampon en sens inverse au sens de roulement en marche avant présente(nt) un volume (V₂) de 10,7 mm³ à 12 mm³.

9. Pneumatique de véhicule selon l'une des revendications 1 à 8, **caractérisé en ce que** le(s) évidement(s) (10, 10') qui s'étend(ent) à partir du crampon (9) dans le sens de roulement en marche avant présente(nt) une longueur d'étendue (l₁) de 4,9 mm à 5,2 mm.

10. Pneumatique de véhicule selon l'une des revendications 1 à 9, **caractérisé en ce que** le(s) évidement(s) (12, 12') qui s'étend(ent) vers l'extérieur en direction de l'épaulement de pneumatique situé plus près du crampon (9) présente(nt) une longueur d'étendue (l₃) de 3,7 mm à 4,2 mm.

11. Pneumatique de véhicule selon l'une des revendications 1 à 10, **caractérisé en ce que** le(s) évidement(s) (11, 11') qui s'étend(ent) à partir du crampon en sens inverse au sens de roulement en marche avant présente(nt) une longueur d'étendue (l₂) de 4,2 mm à 4,7 mm.

12. Pneumatique de véhicule selon l'une des revendications 1 à 11, **caractérisé en ce que** les évidements (10, 10', 11, 11', 12, 12') présentent, au moins sur la majeure partie de leur étendue, une profondeur (T₁) de 0,5 mm à 1,0 mm.

13. Pneumatique de véhicule selon l'une des revendications 1 à 12, **caractérisé en ce que** les évidements (10, 10', 11, 11') s'étendant dans le sens de roulement et en sens inverse à celui-ci sont disposés par paires et de manière à présenter une symétrie miroir par rapport au même axe de symétrie (a₂).

14. Pneumatique de véhicule selon la revendication 13, **caractérisé en ce que** l'axe de symétrie (a₂) s'étend suivant un angle (α) de -20° à 20° par rapport à la direction périphérique.

15. Pneumatique de véhicule selon l'une des revendications 1 à 14, **caractérisé en ce qu'**une paire d'évidements (12, 12') s'étend à partir du crampon (9) vers l'extérieur en direction de l'épaulement de pneumatique situé plus près du crampon (9), les évidements (12, 12') étant disposés de manière à présenter une symétrie miroir par rapport à un axe de symétrie (a₃).

16. Pneumatique de véhicule selon l'une des revendications 13 à 15, **caractérisé en ce que** les axes de symétrie (a₂, a₃) s'étendent perpendiculairement ou sensiblement perpendiculairement l'un à l'autre.
